Europäisches Patentamt

(19) European Patent Office

Office européen des brevets

(11) Numéro de publication : **0 434 529 A1**

(12) # DEMANDE DE BREVET EUROPEEN

(21) Numéro de dépôt : **90403607.6**

(22) Date de dépôt : **14.12.90**

(51) Int. Cl.⁵ : **F16L 27/10**

(30) Priorité : 22.12.89 FR 8917092
29.01.90 FR 9000998
02.05.90 FR 9005532

(43) Date de publication de la demande :
26.06.91 Bulletin 91/26

(84) Etats contractants désignés :
DE ES FR GB IT NL SE

(71) Demandeur : **Société JACQUES DUBOIS**
**82 rue A. Badin**
**F-76360 Barentin (FR)**

(72) Inventeur : **Brandener, Louis**
**80 avenue F. Lefebvre**
**F-78300 Poissy (FR)**

(74) Mandataire : **Fruchard, Guy et al**
**CABINET BOETTCHER 23, rue la Boétie**
**F-75008 Paris (FR)**

(54) **Joint d'échappement et applications à un accouplement d'échappement flexible.**

(57) L'invention concerne un joint d'échappement annulaire (6) comprenant une série de tours de tricot métallique, au moins un tour de tricot métallique étant enveloppé par un feuillard métallique sur au moins une face latérale et ses deux faces extrêmes, et son application à un accouplement d'échappement flexible, en particulier un accouplement d'échappement comprenant un premier tronçon de tube (7) et un second tronçon de tube (8) comportant des fraces d'appui (15, 16) en regard, des brides d'assemblage (12, 13) en saillie vers l'extérieur par rapport aux tronçons de tube, et des moyens de liaison élastiques (17, 18) des brides d'assemblage, dans lequel les faces d'appui (15, 16) des tronçons de tube comportent des épaulements de centrage (11, 14) du joint d'échappement.

FIG.11

EP 0 434 529 A1

## JOINT D'ECHAPPEMENT ET APPLICATIONS A UN ACCOUPLEMENT D'ECHAPPEMENT FLEXIBLE

La présente invention concerne un joint d'échappement, et des applications à un accouplement d'échappement flexible entre deux tronçons de tube d'échappement.

On sait que lors du montage d'une voiture, et plus particulièrement d'une voiture à moteur transversal, il est nécessaire de prévoir un accouplement flexible entre le collecteur d'échappement, fixé au moteur, et le tuyau d'échappement, fixé à la carrosserie et supportant le pot d'échappement.

Afin d'absorber les mouvements relatifs entre le collecteur et le tuyau d'échappement, et afin d'assurer l'étanchéité, l'un des tronçons de tube est généralement terminé par une portée sphérique convexe formée par un joint annulaire porté par l'extrémité de ce tronçon de tube, cette portée sphérique convexe coopérant avec une surface complémentaire de l'autre tronçon de tube d'échappement, les deux tronçons de tube étant associés l'un à l'autre par des brides d'assemblage fixées l'une à l'autre de façon élastique.

Lors des mouvements relatifs des deux tronçons de tube d'échappement, les deux surfaces sphériques frottent l'une contre l'autre et engendrent des vibrations extrêmement désagréables. On a déjà proposé de diminuer le niveau de ces vibrations en prévoyant un joint d'échappement formé par une bande de tricot métallique enroulée sur elle-même et compressée axialement, cette bande de tricot métallique étant chargée dans la partie intérieure du joint avec un matériau réfractaire fibreux et, à la périphérie du joint, avec un matériau réfractaire non fibreux afin d'assurer à la fois une élasticité du joint et une surface externe suffisamment lisse. Afin d'être suffisamment efficace, la couche de matériau réfractaire non fibreux doit être relativement épaisse et diminue d'autant l'élasticité du joint. Il en résulte que l'on a pas réussi à ce jour à supprimer totalement les vibrations engendrées par le frottement des différentes pièces de l'accouplement lors de l'utilisation.

La formation de vibrations ne pouvant pas être totalement supprimée, un but de l'invention est de minimiser ces vibrations, en particulier en augmentant l'élasticité du joint tout en préservant des caractéristiques assurant l'étanchéité de l'accouplement flexible sur lequel le joint est monté.

En vue de la réalisation de ce but, on prévoit selon l'invention un joint d'échappement annulaire comprenant une série de tours de tricot métallique dans lequel au moins un tour de tricot métallique est enveloppé par un feuillard métallique sur au moins une face latérale et deux faces extrêmes.

Selon une version avantageuse de l'invention, le joint comporte une couche de matériau réfractaire fibreux disposée entre le tricot métallique et le feuillard métallique.

Selon un autre aspect avantageux de l'invention, le feuillard métallique s'étend sur une face de chaque tour tournée vers l'axe du joint. Ainsi on a constaté que l'on obtenait une meilleure étanchéité entre le joint d'échappement et les différents composants de l'accouplement flexible.

Selon encore un autre aspect avantageux de l'invention, le joint d'échappement comporte au moins un tour de tricot métallique non enveloppé disposé radialement à l'extérieur des tours de tricot métallique enveloppés par un feuillard métallique.

Ainsi, lors de la compression axiale de la bague élastique lorsque celle-ci est disposée dans l'accouplement, on a constaté que les tours de tricots métallique non enveloppés procuraient une élasticité supplémentaire et assuraient en outre une constance des propriétés élastiques lors d'une utilisation prolongée.

Selon une première application, le joint selon l'invention est monté dans un accouplement flexible comportant une portée sphérique. Dans ce cas, la présence d'une couche de matériau réfractaire fibreux disposée entre le tricot métallique et le feuillard métallique est particulièrement avantageuse car la couche de matériau réfractaire fibreuse présente peu d'aspérités et améliore donc l'état de surface du joint. L'étanchéité procurée par le joint est donc augmentée.

Dans cette application, le joint d'échappement comporte une partie de surface sphérique convexe à sa périphérie pour épouser la forme correspondante de la portée en regard et cette partie sphérique est de préférence sensiblement en totalité recouverte par le feuillard métallique.

Ainsi, on améliore encore l'étanchéité entre la partie sphérique du joint et la partie en regard de l'accouplement flexible.

Pour minimiser encore les vibrations, on prévoit selon une seconde application du joint selon l'invention, un accouplement d'échappement comprenant un premier tronçon de tube et un second tronçon de tube comportant des faces d'appui en regard, des brides d'assemblage en saillie vers l'extérieur par rapport aux tronçons de tube, et des moyens de liaison élastiques des brides d'assemblage, dans lequel les faces d'appui des tronçons de tube comportent des épaulements de centrage d'un joint d'échappement annulaire selon l'invention disposé entre les surfaces d'appui des tronçons de tube d'échappement.

Ainsi, les épaulements de centrage minimisent le glissement du joint d'échappement par rapport aux faces d'appui, ce qui évite par conséquent la formation de bruit au niveau des faces d'appui, le tricot métallique assure une élasticité et une souplesse de l'accouplement permettant des mouvements des tronçons de tube l'un par rapport à l'autre tout en absorbant les vibrations, et le feuillard métallique assure une étanchéité de l'accouplement.

Selon une variation avantageuse de cette application de l'invention, les épaulements de centrage s'étendent à l'intérieur du joint d'échappement. Ainsi, l'épaulement de centrage forme un écran qui protège une partie du feuillard métallique d'un contact direct avec les gaz d'échappement.

Selon un autre aspect avantageux de cette application de l'invention, les moyens de liaison élastiques comprennent des boulons de liaison réunissant les brides d'assemblage et ayant au moins une extrémité traversant librement la bride adjacente, le boulon prenant appui sur cette bride adjacente par l'intermédiaire d'un organe élastique comportant des moyens d'amortissement de vibrations. Ainsi, on minimisqe encore la formation de vibrations au niveau de l'accouplement.

Selon un autre aspect avantageux de l'invention, l'accouplement comporte des organes élastiques de compensation disposés entre les brides d'assemblage de part et d'autre du joint d'échappement, de préférence autour des boulons de liaison. Ainsi, une partie des efforts des moyens de liaison est compensée par ces organes élastiques de compensation et le joint d'échappement est moins fortement sollicité de sorte qu'il assure une meilleure étanchéité même lorsqu'il est est soumis à des gaz d'échappement à température très élevée.

D'autres caractéristiques et avantages de l'invention apparaîtront encore à la lecture de la description qui suit de plusieurs modes de réalisation préférés non limitatifs de l'invention en liaison avec les dessins ci-joints parmi lesquels :

- la figure 1 est une vue en perspective d'une bande de matériau composite dans une étape préparatoire,
- la figure 2 est une demi-vue en coupe axiale d'une préforme selon un premier mode de réalisation de l'invention,
- la figure 3 est une demi-vue en coupe axiale d'une préforme selon un second mode de réalisation de l'invention,
- la figure 4 est une demi-vue en coupe axiale d'un joint d'échappement selon le premier mode de réalisation de l'invention,
- la figure 5 est une demi-vue en coupe axiale du joint d'échappement selon le second mode de réalisation de l'invention,
- la figure 6 est une demi-vue en coupe axiale d'un joint d'échappement selon un troisième mode de réalisation de l'invention,
- la figure 7 est une vue de dessus du mode de réalisation de la figure 6,
- la figure 8 est une vue en perspective d'une bande de matériau composite dans une étape préparatoire d'un quatrième mode de réalisation de l'invention,
- la figure 9 est une demi-vue en coupe axiale d'une préforme servant à réaliser le quatrième mode de réalisation de l'invention,
- la figure 10 est une demi-vue en coupe axiale lors de la compression axiale de la préforme de la figure 9,
- la figure 11 est une vue en coupe axiale d'un accouplement flexible selon la seconde application du joint selon l'invention.

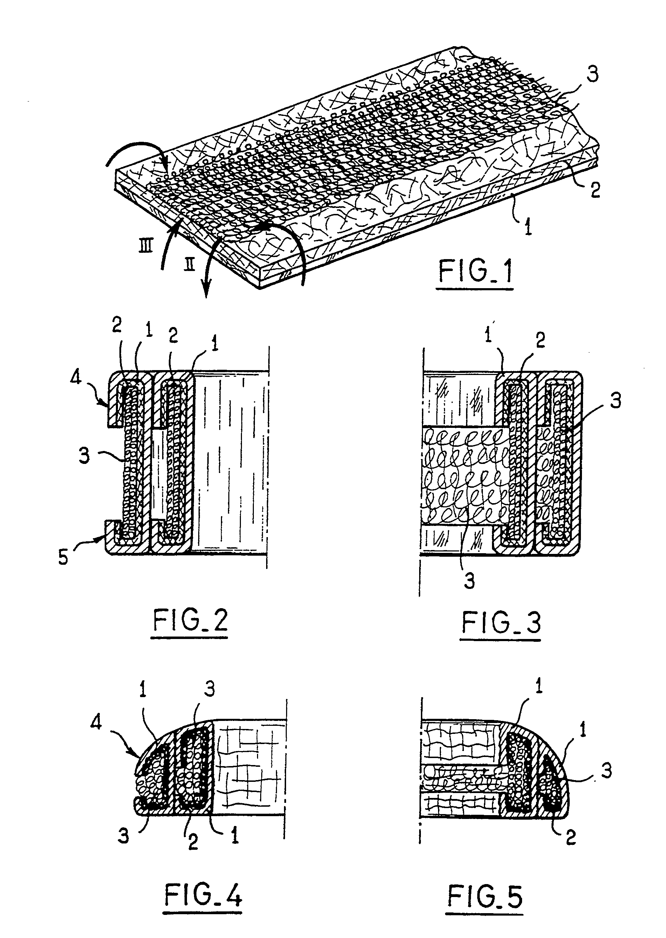

En référence à la figure 1, le joint d'échappement selon l'invention est réalisé en formant tout d'abord une bande composite par superposition d'une bande de feuillard métallique 1 de très faible épaisseur, par exemple de l'ordre de 0,3 mm d'épaisseur, une bande de matériau réfractaire fibreux 2 de l'ordre de 0,6 mm d'épaisseur et une bande de tricot métallique 3 de l'ordre de 1 mm d'épaisseur.

La bande de tricot métallique 3 a de préférence une largeur inférieure à la largeur de la bande de feuillard métallique. Par exemple, pour une bande de feuillard métallique et une bande de matériau réfractaire fibreux de même largeur, de l'ordre de 100 mm, on utilise une bande de tricot métallique d'une largeur de l'ordre de 60 mm. La bande composite est ensuite repliée sur elle-même le long des bords longitudinaux de celle-ci, le pli de ces bords longitudinaux étant de préférence sensiblement en coïncidence avec les bords latéraux de la bande de tricot métallique 3. On remarquera à ce propos que la bande de tricot métallique n'est pas nécessairement disposée de façon symétrique par rapport à la bande de feuillard métallique. En particulier, dans les modes de réalisation illustrés sur les figures 2 et 3, on a ménagé une distance plus grande entre le bord de la bande de tricot métallique et le bord du feuillard métallique sur un côté. La partie de feuillard métallique et de matériau réfractaire 5 qui est repliée sur un côté a une largeur plus grande que la partie de feuillard et de matériau réfractaire 5 qui est repliée sur l'autre côté de la bande de tricot métallique. Afin de minimiser le risque de déchirement du feuillard métallique au niveau des plis, la bande de tricot métallique est de préférence réalisée par applatissement d'un tricot métallique tubulaire.

A partir de la bande composite qui vient d'être décrite, on réalise une préforme cylindrique par enroulement de la bande composite. Dans le mode de réalisation de la figure 2, la bande composite a été enroulée selon la flèche II de la figure 1 avec la face entièrement recouverte de feuillard métallique tournée vers l'axe de symétrie de l'enroulement et la préforme comporte deux tours de bande composite. Dans le mode de réalisation de la figure 3, la préforme comporte également deux tours de bande composite mais la partie de feuillard métallique qui recouvre totalement une face est cette fois tournée à l'opposé de l'axe de symétrie de la préforme par enroulement selon la flèche III de la figure 1.

La préforme cylindrique est ensuite comprimée axialement d'une façon connue en soi dans une matrice et l'on obtient le joint d'échappement 6 définitif dans lequel la densité du tricot métallique est de l'ordre de 1 à 3. Le joint obtenu est représenté sur la figure 4 pour le premier mode de réalisation de l'invention et sur la figure 5 pour le second mode de réalisation de l'invention. On remarquera à ce propos que lors de la compression axiale, le feuillard métallique 1 se plisse mais les plis sont simultanément fortement écrasés. La surface externe du joint d'échappement fini est donc relativement lisse, de sorte qu'elle présente un faible coefficient de frottement et assure une bonne étanchéité lorsque le joint est disposé entre les pièces mobiles d'un accouplement flexible.

En liaison avec la figure 4, on remarquera que dans le cas d'un joint d'échappement comportant une partie de surface sphérique convexe à la périphérie du joint, cette partie de surface est de préférence recouverte sensiblement en totalité par la partie de feuillard métallique 4 repliée sur la face latérale de chaque tour tournée à l'opposé de l'axe du joint.

Les modes de réalisation illustrés sur les figures 4 et 5 sont plus particulièrement destinés à être utilisés dans une première application de l'invention selon laquelle l'accouplement recevant le joint d'échappement comporte d'une façon connue en soit une portée sphérique concave qui est en contact avec la partie sphérique convexe du joint d'échappement 6.

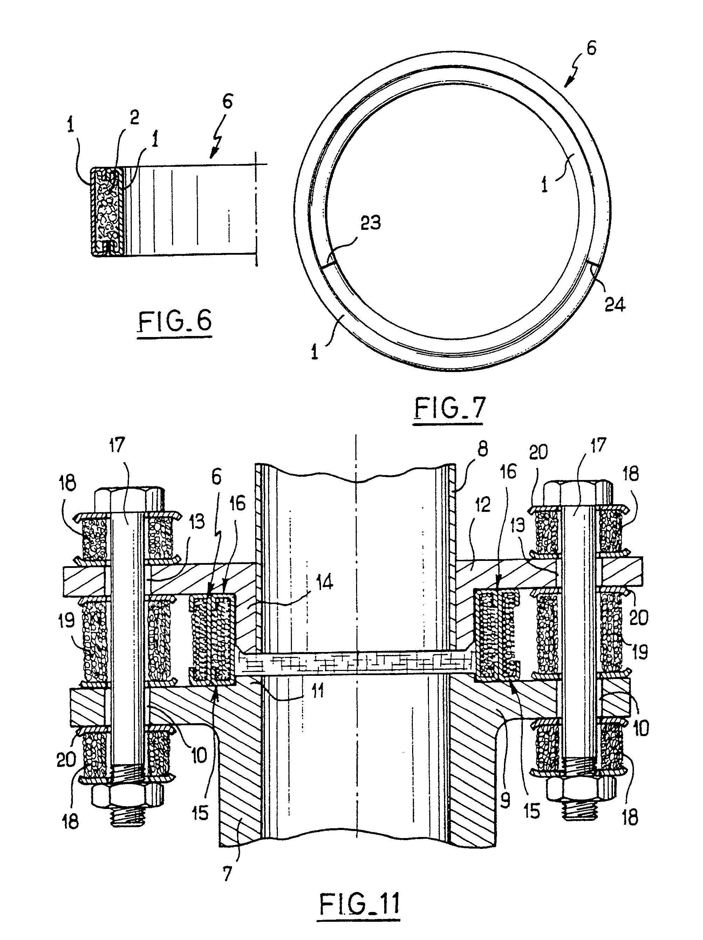

Les figures 6 et 7 illustrent un troisième mode de réalisation de l'invention dans lequel le joint d'échappement comporte deux tours de tricot métallique 1 comme précédemment mais le tour intérieur est cette fois recouvert d'un feuillard métallique 2 sur sa face latérale tournée vers l'axe du joint tandis que le tour extérieur est recouvert de feuillard métallique sur sa face latérale tournée à l'opposé de l'axe du joint. Lors de la compression axiale, on obtient ainsi un enchevêtrement très complet des tricots métalliques des deux tours et donc une cohésion particulièrement forte du joint final tout en préservant une élasticité maximale. Afin d'assurer une bonne étanchéité du joint, l'extrémité apparente 23 du feuillard interne est de préférence décalée par rapport à l'extrémité apparente 24 du feuillard externe.

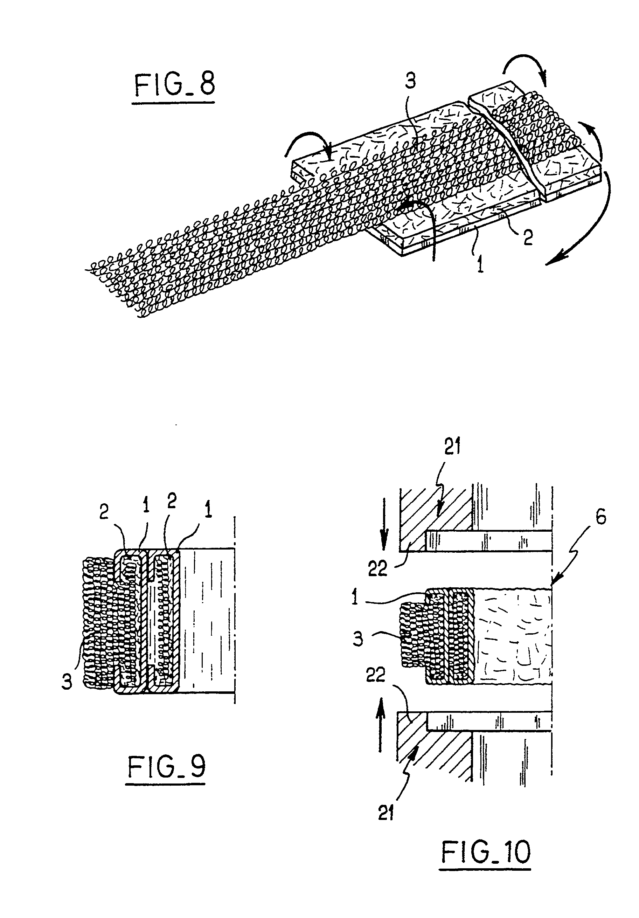

Selon le quatrième mode de réalisation de l'invention illustré par les figures 8 à 10, le feuillard métallique 1 et la bande de matériau réfractaire fibreux 2 ne s'étendent que sur une partie de la longueur de la bande de tricot métallique 3 de sorte qu'après avoir rabattu les bords du feuillard métallique 1 et de la bande de matériau réfractaire fibreux 2, on obtient une bande de tricot métallique ayant une partie enveloppée par le feuillard métallique et une partie non enveloppée.

Après réalisation de la bande composite, celle-ci est enroulée sur elle-même de façon que le feuillard métallique s'étende sur une face de chaque tour tournée vers l'axe de l'enroulement. On réalise ainsi des tours de bande de tricot métallique enveloppés dans le feuillard métallique autour desquels sont disposés des tours de tricot métallique non enveloppés disposés radialement à l'extérieur des tours de tricot métallique enveloppés par le feuillard métallique.

La figure 9 illustre la préforme obtenue avec une bande ayant une longueur permettant de faire deux tours de tricot métallique enveloppés et deux tours de tricot métallique non enveloppés. La préforme obtenue est ensuite comprimée axialement d'une façon connue en soi en disposant la préforme autour d'un noyau cylindrique et à l'intérieur d'un boîtier cylindrique puis en exerçant une pression axiale sur la préforme au moyen d'une matrice se déplaçant selon la direction longitudinale de la préforme.

Selon le mode de réalisation particulier illustré de l'invention dans lequel le feuillard métallique 1 est rabattu sur la bande de tricot métallique sur une face opposée à la face tournée vers l'axe de symétrie de la préforme, la matrice 21 illustrée sur la figure 10 comporte un épaulement 22 en regard des tours de tricot métallique non enveloppés (le noyau et le boîtier cylindrique entre lesquels la matrice coulisse n'étant pas représentés), de sorte que lors du déplacement des matrices 21, les tours de tricot métallique non enveloppés sont plus fortement comprimés axialement que les tours de tricot métallique enveloppés par le feuillard métallique 1. Les tours de tricot métallique non enveloppés s'entremêlent donc avec le tricot métallique des tours de tricot métallique enveloppés seulement dans la zone entre les bords du feuillard de sorte que la force élastique résultant de la compression des tours de tricot métallique non enveloppés est utilisée avec un maximum d'efficacité.

La figure 11 illustre une seconde application de l'invention à un accouplement flexible qui cette fois ne comporte pas de partie de surface sphérique. L'accouplement d'échappement illustré comporte un premier tronçon de tube d'échappement formé par une partie du collecteur d'échappement 7, et un second tronçon de tube d'échappement formé par un tronçon de tube 8 en regard du tronçon de collecteur d'échappement 7 et disposé coaxialement à celui-ci. Le tronçon de collecteur d'échappement 7 est équipé d'une bride en une seule pièce 9 en saillie vers l'extérieur et dans laquelle sont réalisées des ouvertures de passage 10. De façon adjacente à son extrémité, le tronçon de collecteur d'échappement 7 comporte un épaulement 11 servant au centrage du joint 6 qui comporte cette fois des faces extrêmes planes.

De son côté, le tronçon de tube d'échappement 8 est équipé d'une bride rapportée 12 fixée au tronçon de tube 8 par emmanchement à force ou par une soudure. La bride d'assemblage 12 s'étend en saillie par rapport au tronçon de tube 8 et comporte des ouvertures 13 en regard des ouvertures 10 de la bride d'assemblage 9. Par ailleurs, la bride d'assemblage 12 comporte un épaulement 14 qui s'étend largement à l'intérieur du joint d'échappement 6 afin de protéger celui-ci contre un contact direct avec les gaz d'échappement circulant dans les tronçons de tube.

Les faces extrêmes 15 et 16 des brides d'assemblage respectivement adjacentes aux épaulements 11 et 14 forment des faces d'appui pour le joint d'échappement 6. Des boulons 17 sont engagés dans les ouvertures 10 et 13 des brides d'assemblage. Ces boulons ont une tige ayant un diamètre inférieur aux dimensions des ouvertures 10 et 13 afin de permettre un débattement des boulons dans ces ouvertures.

Dans le mode de réalisation illustré, des organes élastiques comportant des moyens d'amortissement de vibrations, tels que des tampons en tricot de fil d'acier comprimé 18 ayant une densité comprise entre 1,5 et 3, sont disposés autour de la tige du boulon 17 entre l'extrémité du boulon et la bride immédiatement adjacente. De préférence, des organes élastiques de compensation analogues 19 sont disposés entre les brides d'assemblage, également autour de la tige des boulons 17. Si cela s'avère nécessaire, des coupelles 20 sont disposées entre les extrémités des organes élastiques 18 ou 19 et la pièce immédiatement adjacente.

On remarquera que l'un quelconque des quatre modes de réalisation de joint d'échappement 6 peut être utilisé dans l'accouplement qui vient d'être décrit.

En particulier, lorsqu'on utilise un joint d'échappement conforme au quatrième mode de réalisation, l'élasticité accrue qui est procurée par les tours de tricot métallique non enveloppés par du feuillard permet de supprimer les organes élastiques de compensation 19. Ces organes peuvent également être supprimés lorsque le joint n'est pas soumis à des températures élevées.

Bien entendu, l'invention n'est pas limités aux modes de réalisation décrits et on peut y apporter des variantes de réalisation sans sortir du cadre de l'invention. En particulier, bien que la réalisation de la bande composite ait été illustrée à partir d'un feuillard mis à plat, on peut former le feuillard métallique en U selon une section transversale avant de le tapisser avec le matériau réfractaire fibreux et disposer la bande de tricot métallique. La bande de tricot métallique se trouve alors automatiquement disposée à la distance souhaitée des bords du feuillard métallique. Bien que la bande de tricot métallique soit de préférence réalisée sous forme d'un tricot métallique tubulaire applati, on peut également réaliser celui-ci sous forme d'une ou plusieurs bandes à simple épaisseur tricotées sur un métier alternatif. On peut également prévoir une bande de tricot métallique ayant la même largeur que le feuillard métallique et la bande de matériau fibreux, cette solution présentant toutefois l'inconvénient de multiplier les épaisseurs lors du repliage de la bande composite le long de ses bords longitudinaux.

Bien que des dimensions aient été données pour les différents composants de la bande composite, ces dimensions sont données seulement à titre illustratif et peuvent varier en fonction des dimensions du joint et des forces auxquelles il est soumis. De même, le nombre de tours de la préforme dépendra du volume final du joint et du volume atteint par chaque tour après compression.

Par ailleurs, si le tricot métallique donne un état de surface suffisant, en particulier dans le cas de la seconde application, le matériau réfractaire fibreux peut être supprimé.

Dans le cas d'un accouplement avec encastrement, le joint peut comporter des surfaces extrêmes rainurées selon des cercles concentriques associés à des surfaces d'appui conformées de façon correspondante pour former des labyrinthes améliorant l'étanchéité.

Des résultats satisfaisants sont également obtenus en vissant directement une extrémité des boulons 17 dans le collecteur d'échappement et en ne disposant alors qu'un tampon élastique 18 entre la tête du boulon et la bride 12 adjacente.

## Revendications

1. Joint d'échappement annulaire comprenant une série de tours de tricot métallique, caractérisé en ce que au moins un tour de tricot métallique (3) est enveloppé par un feuillard métallique (1) sur au moins une face latérale et deux faces extrêmes.

2. Joint d'échappement annulaire selon la revendication 1, caractérisé en ce qu'il comporte une couche de matériau réfractaire fibreux (2) disposée entre le tricot métallique (3) et le feuillard métallique (1).

3. Joint d'échappement annulaire selon la revendication 1, caractérisé en ce que le feuillard métallique (1) s'étend sur une face tournée vers l'axe du joint.

4. Joint d'échappement annulaire selon la revendication 3, caractérisé en ce que le feuillard métallique (1) s'étend également sur une partie de la face latérale de chaque tour tournée à l'opposé de l'axe du joint.

5. Joint d'échappement annulaire selon la revendication 4, présentant une partie de surface sphérique convexe à la périphérie du joint, caractérisé en ce que cette partie de surface est sensiblement en totalité recouverte par le feuillard métallique (1).

6. Joint d'échappement annulaire selon la revendication 1, comportant au moins deux tours de tricot métallique, caractérisé en ce que le tour le plus interne est recouvert de feuillard métallique sur une latérale tournée vers l'axe du joint et le tour le plus externe est recouvert de feuillard métallique sur une face latérale opposée à l'axe du joint.

7. Joint d'échappement annulaire selon la revendication 3, caractérisé en ce qu'il comporte au moins un tour de tricot métallique non enveloppé disposé radialement à l'extérieur des tours de tricot métallique enveloppés par un feuillard métallique.

8. Joint d'échappement annulaire selon la revendication 7, dans lequel le feuillard métallique s'étend partiellement sur une face des tours de tricot métallique opposée à l'axe de symétrie du joint annulaire caractérisé en ce que les tours de tricot métallique non enveloppés sont disposés entre les bords du feuillard métallique.

9. Joint d'échappement annulaire selon la revendication 8, caractérisé en ce qu'il est obtenu par compression axiale d'une préforme cylindrique réalisée par enroulement d'une bande de tricot métallique (3) ayant une partie enveloppée par un feuillard métallique (1) rabattu sur la bande de tricot métallique et une partie non enveloppée, et en ce que les tours de tricot métallique non enveloppés sont plus fortement comprimés que les tours de tricot métallique enveloppés par un feuillard métallique.

10. Accouplement d'échappement comprenant un premier tronçon de tube (7) et un second tronçon de tube (8) comportant des faces d'appui (15, 16) en regard, des brides d'assemblage (12, 13) en saillie vers l'extérieur par rapport aux tronçons de tube, et des moyens de liaison élastiques (17, 18) des brides d'assemblage, caractérisé en ce que les faces d'appui (15, 16) des tronçons de tube comportent des épaulements de centrage (11, 14) d'un joint d'échappement annulaire (6) disposé entre les surfaces d'appui des tronçons de tube d'échappement, ce joint d'échappement comprenant une série de tours de tricot métallique (3) dont au moins un tour est enveloppé par un feuillard métallique (1) sur au moins une face latérale et deux faces extrêmes.

11. Accouplement d'échappement selon la revendication 10, caractérisé en ce que les épaulements de centrage (11, 14) s'étendent à l'intérieur du joint d'échappement annulaire.

12. Accouplement d'échappement selon la revendication 10, caractérisé en ce qu'il comporte en outre des organes élastiques de compensation (19) disposés entre les brides d'assemblage de part et d'autre du joint d'échappement annulaire (6).

13. Accouplement d'échappement selon la revendication 12, caractérisé en ce que les organes élastiques de compensation comprennent des tampons de tricot de fil d'acier comprimé.

14. Accouplement d'échappement selon la revendication 10, caractérisé en ce que les moyens de liaison élastiques comprennent des boulons de liaison (17) réunissant les brides d'assemblage (9, 12) et ayant au moins une extrémité traversant librement la bride adjacente, le boulon (17) prenant appui sur cette bride adjacente par l'intermédiaire d'un organe élastique (18) comportant des moyens d'amortissement des vibrations.

15. Accouplement d'échappement selon la revendication 14, caractérisé en ce qu'il comporte des organes élastiques de compensation (19) disposés entre les brides d'assemblage autour des boulons de liaison (17).

FIG_1

FIG_2

FIG_3

FIG_4

FIG_5

FIG.6

FIG.7

FIG.11

FIG_8

3

2

1

2

FIG_9

2 1 2 1

3

FIG_10

21

22

1

3

22

21

6

EP 0 434 529 A1

**Office européen des brevets**

# RAPPORT DE RECHERCHE EUROPEENNE

Numero de la demande

EP 90 40 3607

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 249 519 (J. DUBOIS)<br>* Le document en entier * | 1-5,7 | F 16 L 27/10 |
| A | US-A-4 551 393 (K. SUMIYOSHI et al.)<br>* Abrégé; figures * | 1-5 | |
| A | FR-A-2 626 041 (OILES CORP.)<br>* Abrégé; figures * | 1-5 | |
| A | EP-A-0 337 854 (J. DUBOIS)<br>* Abrégé; figures * | 10,14 | |
| A | EP-A-0 197 287 (GOETZE AG)<br>* Abrégé; figures * | 10,14 | |
| A | DE-A-2 829 333 (METEX CORP.)<br>* Revendication 1; figures 1,2,4 * | 10,14 | |
| A | US-A-4 423 544 (G.E. KASHMERICK) | | |
| A | FR-A-2 266 095 (S.E.M.A.) | | DOMAINES TECHNIQUES RECHERCHES (Int. Cl.5) |
| A | FR-A-2 588 916 (R.N.U.R.) | | F 16 L<br>F 01 N<br>F 16 J |
| A | EP-A-0 303 068 (FEODOR BURGMANN DICHTUNGSWERKE) | | |
| A | FR-A-2 490 778 (GOETZE AG) | | |

Le présent rapport a été établi pour toutes les revendications

| Lieu de la recherche | Date d'achèvement de la recherche | Examinateur |
|---|---|---|
| LA HAYE | 22-03-1991 | FRANKS N.M. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
    ...............................................................
& : membre de la même famille, document correspondant

EPO FORM 1503 03.82 (P0402)

10